# EUROPÄISCHE PATENTSCHRIFT

(11) **EP 0 711 948 B1**
(45) Veröffentlichungstag und Bekanntmachung des Hinweises auf die Patenterteilung: **14.01.1998**
(21) Anmeldenummer: 95116477.1
(22) Anmeldetag: 19.10.1995
(51) Int. Cl.: F16L 47/02, B29C 65/34

(54) **Schweissmuffe zum Verbinden von Kunststoffrohrteilen**
Welding sleeve for connecting tubular parts of plastics
Manchon à souder pour connexion de parties tubulaires de la matière plastique

(30) Priorität: 19.10.1994 DE 4437407
(43) Veröffentlichungstag der Anmeldung: 15.05.1996
(73) Patentinhaber: "agru" Alois Gruber Gesellschaft m.b.H., A-4540 Bad Hall (AT)
(72) Erfinder: Heinzlreiter, Heinrich, A-4441 Behamberg (AT)
(74) Vertreter: Rupprecht, Klaus, Dipl.-Ing.

(56) Entgegenhaltungen:
- EP-A- 0 253 966
- DE-A- 3 808 228
- FR-A- 2 648 077

## Beschreibung

Die Erfindung bezieht sich auf eine Schweißmuffe mit elektrischen Heizelementen zum Verbinden von Kunststoffrohrteilen, die mit koaxialen Schlitzen versehene rohrförmige Ansätze und jeweils einen Spannring zur Aufnahme der Kunststoffrohrteile aufweist.

Es sind verschiedene Techniken zum Verschweißen von Kunststoffrohren bekannt. Hierbei werden miteinander zu verbindende Rohre axial ausgerichtet und durch Wärmeeinrichtung unter Erweichen der aneinandergrenzenden Rohrteilbereiche miteinander verbunden. Insbesondere ist es bekannt, miteinander zu verbindende Rohrteile in einer sog. Elektromuffe anzuordnen, die zu diesem Zweck vorbereitete koaxiale Muffenansätze aufweist. Die Muffe ist mit einem elektrischen Heizelement versehen. Durch Zuführung von elektrischem Strom und Widerstandsheizung kommt es zu einem Erweichen von Kunststoffanteilen der Muffe und der dort eingesteckten Rohre. Nach Abschalten des elektrischen Stromes und Erkalten der erweichten oder geschmolzenen Kunststoffanteile von Muffe und Rohrteilen liegt eine feste und dichte Verbindung der Rohrteile mit der Elektromuffe vor.

Beim Zusammenfügen von Rohrteilen in der beschriebenen Weise ist es zur Herbeiführung eines einfachen und kostengünstigen Schweißprozesses erforderlich, die miteinander zu verbindenden Rohrteile ohne Zuhilfenahme besonderer externer Spannvorrichtungen zusammen mit der Elektromuffe axial fluchtend auszurichten, um diese Teile anschließend in der beschriebenen Weise miteinander zu verschweißen.

Eine Schweißmuffe dieser Art ist aus dem Dokument EP 253 966 B1 bekannt. Hierbei werden Spannringe auf die Muffen aufgeschraubt, um mit einer Steigung oder einem Konus versehene Ansätze an das eingesteckte, mit der Muffe zu verschweißende Rohr anzupressen und somit zu haltern. Der Anpreßdruck kann auch mittels separater Spannbänder über die Spannringe ausgeübt werden.

Das Dokument JP 6-2797 A. In: Patent Abstract of Japan, M-1589, April 6, 1994, Vol. 18, No 196, beschreibt ebenfalls eine Elektromuffe. Die äußeren Ansätze dieser Muffe verlaufen nach außen konisch ansteigend. Nach Einführen der zu verschweißenden Rohre werden Gleitringe nach außen geschoben, die die Ansätze radial nach innen drücken und fest an ein eingeführtes Rohr anlegen.

Die Aufgabe der Erfindung besteht darin, eine Schweißmuffe der eingangs genannten Art zu schaffen, die nicht nur eine zuverlässige axiale Ausrichtung und Halterung der Kunststoffrohrteile während des Schweißvorgangs ohne Zuhilfenahme besonderer Werkzeuge wie Haltevorrichtungen, Schrauben oder dgl. ermöglicht, sondern auch einfacheren konstruktiven Aufbau aufweist und eine vergleichsweise schnelle Montage zuläßt.

Diese Aufgabe ist gemäß der Erfindung dadurch gelöst, daß die rohrförmigen Ansätze radial sich nach außen erstreckende Erhöhungen aufweisen, daß je ein Spannring auf den Ansätzen vorgesehen ist, der an seiner Innenfläche mit korrespondierenden Erhöhungen versehen ist, und daß die rohrförmigen Ansätze durch Drehen der jeweiligen Spannringe und dadurch erfolgendes Zusammenwirken der Erhöhungen der rohrförmigen Ansätze und der Spannringe mit den jeweiligen Kunststoffrohrteilen verspannbar sind.

Die Erfindung stellt eine Elektromuffe zur Verfügung, die in der Lage ist, für sich alleine genommen eine zuverlässige Halterung für die in ihr angeordneten und zu verschweißenden Rohrteile zur Verfügung zu stellen. Dies geschieht dadurch, daß vor dem Einschieben der Rohre in die Elektromuffe auf erstere jeweils ein Spannring aufgeschoben wird. Nach dem Einführen der Rohrteile in die Elektromuffe werden die Spannringe auf die rohrförmigen Ansätze hinreichend aufgeschoben und so verdreht, daß die Erhöhungen der Spannringe und der rohrförmigen Ansätze aufeinander treffen. Hierdurch kommt es zu einem festen Anliegen der Ansätze an den eingeschobenen Rohrteilen und zu deren hinreichenden und fluchtenden Halterung in der Muffe. Sodann kann der eigentliche Schweißvorgang durchgeführt werden.

Ein zeitaufwendiges Verschrauben des Spannringes um mehrmals 360° oder das zusätzliche Anbringen von Spannbändern enffällt. Auf das Anbringen von teuren Gewinden bei den Ansätzen und den Spannringen kann bei der erfindungsgemäßen Muffe völlig verzichtet werden.

Erfindungsgemäß ist weiterhin vorgesehen, daß die Ansätze durch vier Schlitze in vier im wesentlichen gleich große Spannlaschen unterteilt sind. Bei einer derartigen Ausbildung der Ansätze mit einer jeweils darauf angeordneten Erhöhung und korrespondierender Anordnung von vier Erhöhungen im Spannring kommt es zu einer besonders guten Druckverteilung rings um das jeweilige Rohrteil bei wirtschaftlicher Ausbildung der rohrförmigen Ansätze der erfindungsgemäßen Elektromuffe, bei einer Drehung des Spannrings um lediglich etwa 90°.

Ein besonders bevorzugtes Ausführungsbeispiel der Erfindung zeichnet sich dadurch aus, daß die Spannlaschen in Stirnansicht gesehen sägezahnartige Konfiguration aufweisen, wobei die Spannringe wiederum korrespondierend ausgebildet sind. Korrespondierend bedeutet insbesondere, daß die Spannringe ebenso sägezahnartig vorgesehen sind. Beim Drehen des aufgeschobenen Ringes und Verspannen der Spannlappen mit dem darunter befindlichen Rohrteil gleiten die so gebildeten Nockenflächen der Erhebungen gut aneinander ab. Es kann somit eine besonders effektive und zuverlässige Verspannung von Spannlappen mit dem zugehörigen Rohrteil erzielt werden.

Schließlich liegt es im Rahmen der Erfindung, daß die Spannringe eine ihre axiale Verschiebung begrenzend Anschlagschulter aufweisen. Sie dient insbesondere dazu, eine Bedienungsperson einen zuverlässigen Hinweis darauf zu geben, daß der Spannring beim Erreichen seiner Anschlagposition hinreichend aufgeschoben ist und daß sodann unmittelbar seine radiale Verdrehung zum Verspannen des Rohrteiles vorgenommen werden kann.

Weitere Einzelheiten, Merkmale und Vorteile der Erfindung ergeben sich aus der folgenden Beschreibung eines bevorzugten Ausführungsbeispieles sowie anhand der schematischen Zeichnung.

Es zeigen:
- Fig. 1: eine erfindungsgemäße Elektromuffe mit darin angeordneten Rohrteilen im Längsschnitt;
- Fig. 2: den Gegenstand der Fig. 1 nach einer Drehung um 90° in der Draufsicht und teilweise geschnitten;
- Fig. 3: eine Teilansicht des Gegenstandes der Fig. 1 in vergrößerter Darstellung mit losem Spannring;
- Fig. 4: einen Schnitt nach Linie IV-IV der Fig. 3;

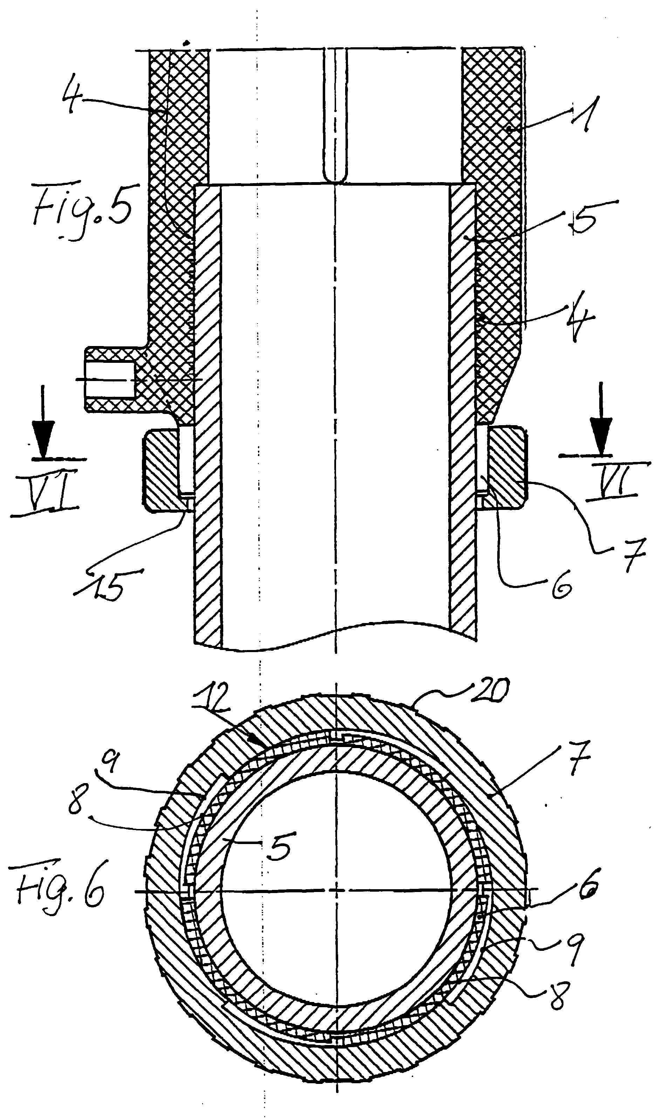

- Fig. 5: den Gegenstand der Fig. 3 mit vorgespanntem Spannring und
- Fig. 6: einen Schnitt nach Linie VI-VI der Fig. 5.

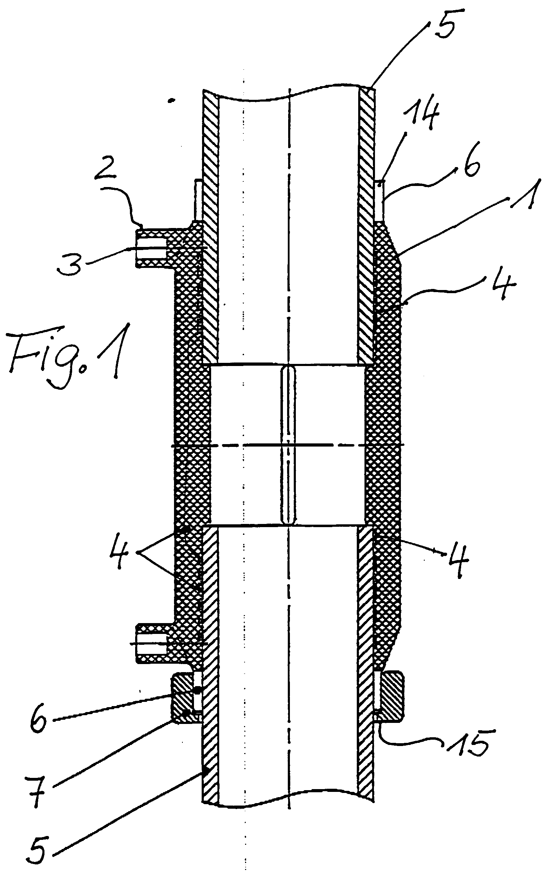

Fig. 1 zeigt eine Elektroschweißmuffe 1 aus Kunststoff mit Stöpseln 2 und darin befindlichen elektrischen Klemmen 3, die im Inneren der Muffe zu Heizelementen 4 führen, welche die Öffnung umgeben, in der Rohrteile 5 aus Kunststoff angeordnet sind, um in dieser Position mit der Elektromuffe 1 verschweißt zu werden. Die Führung der Rohrteile 5 durch die Muffe 1 ist jeweils hinreichend lang, um ein axiales Fluchten beider Rohrteile 5 zu gewährleisten. Der Außendurchmesser der Rohrteile 5 entspricht im wesentlichen dem Innendurchmesser der Muffe 1 in dem Bereich, in dem sie die Rohrteile 5 lagert.

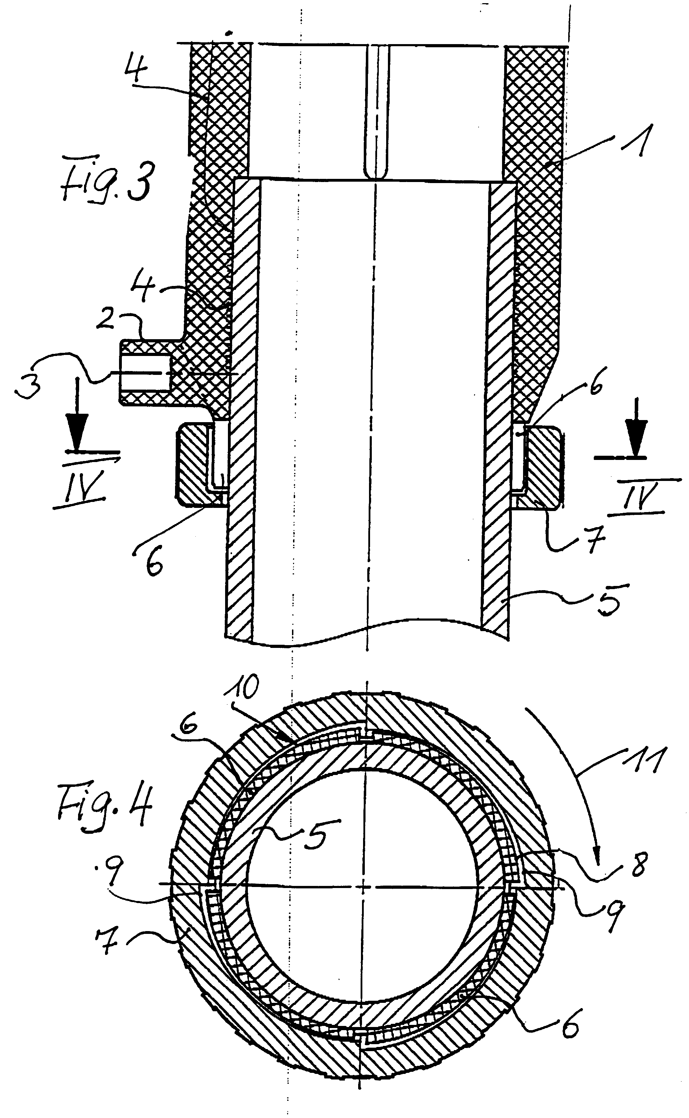

An ihren axialen Enden setzt sich die Elektroschweißmuffe 1 in je einem grundsätzlich rohrförmigen Ansatz fort, dessen Innendurchmesser wiederum im wesentlichen dem Außendurchmesser der Rohrteile 5 entspricht. Beim hier gezeigten bevorzugten Ausführungsbeispiel sind die beiden rohrförmigen Ansätze durch Anbringen von vier axialen Schlitzen 14, die gleichmäßig, also unter einem Winkel von 90° zueinander vorgesehen sind, in vier Spannlappen 6 unterteilt; vgl. Fig. 4 und 6. Wie die Fig. 4 und 6 ebenfalls zeigen weisen die Spannlappen 6 jeweils ausgehend von der etwa 0°-, 90°-, 180°- und 270°-Stellung ausgehend eine kontinuierlich zunehmende Erhöhung auf, wodurch sich ein etwa sägezahnartiger, bogenförmiger Querschnitt einstellt. In ähnlicher Weise ist der Spannring 7 ausgebildet, jedoch mit jeweils etwas größerem Radialabstand der der jeweils korrespondierenden Stelle der Spannlappen 6 entsprechenden Stelle des Spannringes 7, so daß sich auch dort eine sägezahnartige, bogenförmige Ausbildung im Querschnitt ergibt. Wie sich aus den Fig. 4 und 6 ergibt, entspricht bei lose aufgestecktem Spannring 7 gemäß Fig. 4 dem Bereich des Spannlappens 6 mit geringster Erhöhung ein Bereich des Spannringes 7 mit geringstem Abstand zum Rohrmittelpunkt, dem Bereich größter Erhöhung des Spannlappens 6 ein Bereich mit größtem radialen Abstand des Innenbereiches des Spannringes 7 zum Mittelpunkt des Rohrteiles 5. Der Übergang vom Bereich geringster Höhe des Spannlappens 6, beispielsweise etwa im 0°-Bereich zum Bereich größter Erhöhung, etwa 90°, verläuft kontinuierlich, ebenso die korrespondierende Innenfläche des Spannringes 7 im Bereich von 0° bis 90°. Dies gilt auch für die drei weiteren Spannlappen 6 der vier Quadranten. Auf diese Weise ergibt sich im gelösten Zustand des Spannringes 7 gemäß Fig. 4 jeweils ein etwa sichelförmiger Zwischenraum 10 zwischen dem jeweiligen Spannlappen 6 und dem Spannring 7. Diese erfindungsgemäße Ausbildung der Elektroschweißmuffe 1 ermöglicht es, den Spannring 7 in Richtung des Pfeiles 11 zu drehen, wodurch es zu einem festen Anliegen von Teilen des Spannringes 7 an den Spannlappen 6 kommt, siehe Pfeil 12. Es erfolgt hierdurch eine Druckbeaufschlagung des Rohrteiles 5 und eine Verspannung desselben mit den Spannlappen 6 und somit der Elektromuffe 1. Wenn dieser Zustand gemäß Fig. 6 an beiden Enden der erfindungsgemäßen Elektroschweißmuffe 1 erreicht ist, kann der eingangs erläuterte Schweißvorgang durchgeführt werden.

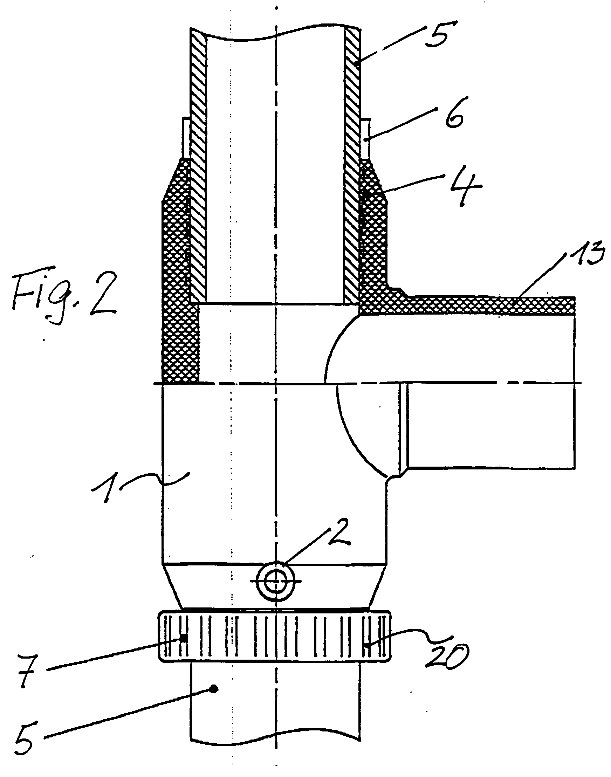

Aus Fig. 2 ergibt sich, daß die erfindungsgemäße Schweißmuffe 1 auch als T-Stück ausgeführt sein kann, wobei der Stutzen 13 auf andere Weise mit einem weiteren Rohrteil verschweißt werden kann. Andererseits ist es natürlich möglich, auch diesen Stutzen mit einem elektrischen Heizelement und Spannlappen 6 und einem Spannring 7 gemäß der Erfindung auszubilden.

Wie sich aus der Zeichnung ergibt, kann der Spannring 7 mit einer Rändelung 20 versehen sein, so daß er ohne Zuhilfenahme eines Werkzeuges von Hand ausreichend fest angezogen werden kann.

Als Kunststoff für die Rohrteile 5 und die Elektromuffe 1 kommen im wesentlichen PEHD, PP und PVDF in Frage. Grundsätzlich werden Rohrteile 5 und Muffe 1 aus gleichem Kunststoff gefertigt. Es ist jedoch auch möglich, unterschiedliche Materialien miteinander zu verschweißen, so lange ihre Erweichungs- oder Schmelzbereiche ausreichend nahe beieinander liegen.

Wie die Fig. 1 und 3 zeigen, ist der Spannring 7 mit einer ringförmigen Anschlagschulter 15 versehen, die bei vollständigem Aufschieben des Spannringes 7 auf die Spannlappen 6 mit diesen zusammenwirkt und somit eine präzise Anordnung des Spannringes 7 auf den Spannlappen 6 bzw. den rohrförmigen Ansätzen sorgt. Sobald die Bedienungsperson das Aufeinandertreffen von Anschlagschulter 15 und Spannlappen 6 verspürt, ist dies ein Hinweis darauf, daß die Radialverdrehung des Spannringes 7 bei optimalem Aufeinandertreffen der sägezahnartigen, bogenförmigen Nockenflächen von Spannring 7 und Spannlappen 6 vorgenommen werden kann.

Neben der geschilderten Einteilunq der Ansätze in vier etwa gleich große Spannlappen 6 ist es durchaus möglich, eine hiervon abweichende Anzahl von Spannlaschen zu wählen, beispielsweise zwei, drei oder fünf derartiger Laschen.

## Patentansprüche

1. Schweißmuffe (1) mit elektrischen Heizelementen (4) zum Verbinden von Kunststoffrohrteilen (5), die mit axialen Schlitzen (14) versehene rohrförmige Ansätze und jeweils einen Spannring (7) zur Aufnahme der Kunststoffrohrteile (5) aufweist, dadurch gekennzeichnet, daß die rohrförmigen Ansätze radial sich nach außen erstreckende Erhöhungen aufweisen, daß jeder Spannring (7) an seiner Innenfläche mit korrespondierenden Erhöhungen versehen ist, und daß die rohrförmigen Ansätze durch Drehen der jeweiligen Spannringe (7) und dadurch erfolgendes Zusammenwirken der Erhöhungen der rohrförmigen Ansätze und der Spannringe (7) mit den jeweiligen Kunststoffrohrteilen (5) verspannbar sind.

2. Muffe nach Anspruch 1, dadurch gekennzeichnet, daß die Ansätze durch vier Schlitze (14) in vier im wesentlichen gleich große Spannlaschen (6) unterteilt sind und daß die Ansätze durch Drehen der Spannringe um etwa 90° mit den eingesetzten Rohrteilen (5) verspannbar sind.

3. Muffe nach Anspruch 2, dadurch gekennzeichnet, daß die Spannlaschen (6) in Stirnansicht gesehen sägezahnartige Konfiguration aufweisen, wobei die Spannringe (7) korrespondierend mit jeweils größerem Innenradius als die korrespondierende Stelle des Spannringes (7) ausgebildet ist.

4. Muffe nach Anspruch 1 bis 3, dadurch gekennzeichnet, daß die Spannringe (7) eine ihre axiale Verschiebung begrenzende Anschlagschulter (15) aufweisen.

5. Muffe nach mindestens einem der Ansprüche 2 bis 4, dadurch gekennzeichnet, daß die elektrischen Heizelemente (4) angrenzend an die Spannlaschen (6) in der Muffe (1) eingebettet angeordnet sind.

## Claims

1. Welding sleeve (1) with electric heating elements (4) for connecting plastic pipe pieces (5) which has tubular projections provided with axial slots (14) and in each case a clamping ring (7) to receive the plastic pipe pieces (5), characterized in that the tubular projections have elevations which extend radially outwards, in that each clamping ring (7) is provided on its inner surface with corresponding elevations, and in that the tubular projections can be braced with the respective plastic pipe pieces (5) by turning the respective clamping rings (7) and thus by interaction of the elevations of the tubular projections and the clamping rings (7) taking place.

2. Sleeve according to Claim 1, characterized in that the projections are subdivided by four slots (14) into four clamping lugs (6) of essentially equal size, and in that the projections can be braced with the inserted pipe pieces (5) by turning the clamping rings through about 90°.

3. Sleeve according to Claim 2, characterized in that, seen in a front view, the clamping lugs (6) have a sawtooth-like configuration, the clamping rings (7) being of corresponding design, in each case with a larger inside radius than the corresponding point on the clamping ring (7).

4. Sleeve according to Claims 1 to 3, characterized in that the clamping rings (7) have a stop shoulder (15) which limits their axial displacement.

5. Sleeve according to at least one of Claims 2 to 4, characterized in that the electric heating elements (4) are arranged embedded in the sleeve (1) adjacent to the clamping lugs (6).

## Revendications

1. Manchon à souder (1) à éléments de chauffage électriques (4) pour la connexion de parties tubulaires en matière plastique (5), qui présent des bouts tubulaires pourvus de fentes axiales (14), et à chaque fois un anneau tendeur (7) pour la réception des parties tubulaires en matière plastique (5), caractérisé en ce que les bouts tubulaires présentent des protubérances se prolongeant radialement vers l'extérieur, en ce que chaque anneau tendeur (7) est pourvu sur sa surface interne de protubérances correspondantes, et en ce que les bouts tubulaires peuvent être fixés sous tension aux parties tubulaires en matière plastique (5) correspondantes, par une rotation des anneaux tendeurs (7) correspondants et par une coopération se produisant de ce fait entre les protubérances des bouts tubulaires et des anneaux tendeurs (7).

2. Manchon (1) selon la revendication 1, caractérisé en ce que les bouts sont subdivisés par quatre fentes (14) en quatre éclisses de tension 6 de taille pour l'essentiel identique, et en ce que les bouts peuvent être fixés sous tension aux parties tubulaires (5) utilisées par une rotation des anneaux tendeurs d'environ 90°.

3. Manchon selon la revendication 2, caractérisé en ce que les éclisses de tension (6) présentent, en vue frontale, une configuration sous forme de dents, l'anneau tendeur (7) étant formé de manière correspondante avec à chaque fois un rayon interne plus grand que l'endroit correspondant de l'anneau tendeur (7).

4. Manchon (1) selon la revendication 1 à 3, caractérisé en ce que les anneaux tendeurs (7) présentent un épaulement de butée (15) limitant leur déplacement axial.

5. Manchon (1) selon au moins l'une quelconque des revendications 2 à 4, caractérisé en ce que les éléments de chauffage électriques (4), adjacents aux éclisses de tension (6), sont disposés encastrés dans le manchon à souder (1).
